# EUROPÄISCHE PATENTSCHRIFT

(11) **EP 2 040 837 B1**
(45) Veröffentlichungstag und Bekanntmachung des Hinweises auf die Patenterteilung: **20.06.2012**
(21) Anmeldenummer: 06752591.5
(22) Anmeldetag: 04.07.2006
(51) Int. Cl.: B01J 29/04, C01B 33/38, C01B 39/00, A62D 3/33

(54) **VERFAHREN ZUR SCHWERMETALLABTRENNUNG**
METHOD FOR THE REMOVAL OF HEAVY METALS
PROCÉDÉ D'EXTRACTION DE MÉTAUX LOURDS

(43) Veröffentlichungstag der Anmeldung: 01.04.2009
(73) Patentinhaber: Glock, Gaston, 9220 Velden (AT)
(72) Erfinder: Glock, Gaston, 9220 Velden (AT)
(74) Vertreter: Patentanwälte Barger, Piso & Partner
(86) Internationale Anmeldenummer: PCT/AT2006/000284
(87) Internationale Veröffentlichungsnummer: WO 2008/003101

(56) Entgegenhaltungen:
- WO-A-96/14901
- DE-A1- 4 309 865
- JP-A- 2 103 281
- JP-A- 5 253 319
- US-A- 4 297 243
- US-A- 5 665 783

## Beschreibung

Die Erfindung betrifft ein Verfahren zur Schwermetallabtrennung aus Gerüst- bzw. Schichtsilikaten, besonders aus Zeolith und insbesondere aus natürlichem Zeolith wie Clinoptilolith bzw. hauptsächlich Clinoptilolith enthaltende Zeolithe oder auch aus anderen, synthetischen Zeolithen mit vergleichbarer Ionenselektivität.

Zum Abtrennen von Schwermetallen aus kontaminierten Feststoffen allgemein ist es aus der DE 43 09 865 A bekannt, den Feststoff mit einem Chelatbildner, nämlich Acetylaceton, gegebenenfalls in Verbindung mit NTA, behandelt wird. Die Gerüst- bzw. Schichtsilikate, die erfindungsgemäß von anhaftenden Schwermetallen gereinigt werden sollen, stellen Molekularsiebe dar, daher ist diese Methode bei ihnen nicht erfolgreich anwendbar.

Gerüst- bzw. Schichtsilikate, insbesondere aber Clinoptilolith-haltiger Naturzeolith wird in großen Mengen weltweit an verschiedenen Fundorten gewonnen und gelangt nach einem Mahlprozess zum Beispiel als Futtermittelzusatzstoff oder als Food Additive zur Anwendung. Gerade der Einsatz im Nahrungsmittelbereich macht es erforderlich, die natürlich bedingte Beladung des Gesteins mit Schwermetallionen zu vermindern oder zu entfernen. Bisher war eine solche Reduktion bzw. Entfernung nicht möglich.

Es ist Ziel der Erfindung, ein Verfahren anzugeben, durch das die Schwermetallbelastung von Gerüst- bzw. Schichtsilikaten, besonders von Zeolith und insbesondere von natürlichem Zeolith wie Clinoptilolith bzw. hauptsächlich Clinoptilolith enthaltenden Zeolithen oder auch aus anderen, synthetischen Zeolithen, deutlich reduziert und, wenn gewünscht praktisch beseitigt werden kann. Bevor auf die erfindungsgemäße Lösung eingegangen wird, sollen einige für das erfindungsgemäße Verfahren bedeutsame Eigenschaften von Zeolith am Beispiel von Clinoptilolith erläutert werden, wobei aber diese Eigenschaften in unterschiedlichem Ausmaß auch bei den anderen Gerüst- bzw. Schichtsilikaten gegeben sind.

Das Mineral Clinoptilolith ist ein Tektosilicat, mit der kristallographischen Struktur Heulandit, dessen Zusammensetzung im Wesentlichen der Formel

(Na, K)(x-2y)(Ca, Mg)y(AlxSi(36-x)O72).24H2O (1)

entspricht. Hierbei sind neben Calcium- und Magnesiumionen auch zweiwertige Schwermetallionen wie Blei, Barium, Strontium, Cadmium und neben Natrium und Kalium auch einwertige Schwermetallionen wie Cäsium und Rubidium eingelagert. Das kristallographische Silizium/Aluminium-Verhältnis beträgt für Clinoptilolith Si/Al > 4 und liegt typischerweise im Bereich Si/Al ~5.

Die Struktur von Zeolith basiert auf einer dreidimensionalen Vernetzung von Si04-Tetraedern, die über die Sauerstoffatome verbunden sind. Dabei ist ein Teil der Siliziumatome durch Aluminiumatome ersetzt, Die Gerüststruktur enthält regelmäßige Poren und Kanalsysteme. Die negativen Ladungen der Silizium/Aluminium-Tetraeder werden durch positive ein- und zweiwertige Ionen sowie durch Wasser kompensiert.

Die Kanalsysteme mit freien Durchmessern von bis 0,44 - 0,72 Nanometer erlauben das Eindringen von Ionen und Molekülen und geben dem Zeolith damit seine Ionenaustauscheigenschaften.

Näheres über die Kanalsysteme und die chemischen Eigenschaften ist dem Buch Silikatchemie von Petzold - Hinz, Ferdinand Enke Verlag, Stuttgart 1979 zu entnehmen.

Das erfindungsgemäße Verfahren beruht auf der Überlegung, die hohe Selektivität des Minerals für größere Ionen, insbesondere Ammonium, hinsichtlich der Aufnahme von Ionen zu nutzen:

NH4+ > K+ > Mg2+ > Ca2+ (2)

Cs+ > Rb+ > K+ > NH4+ > Sr2+ > Na+ > Ca2+ > Fe2+ > Al3+ > Mg2+ (3)

Pb2+ > Cd2+> Ba2+ > Sr2+ > Ni2+ (4)

Aufgrund der hohen Selektivität des Minerals Clinoptilolith und von Zeolithen allgemein (aber auch von anderen Gerüst- bzw. Schichtsilikaten) für Ammonium als einem Nichtschwermetallion, kommt diesem Ion eine besondere Bedeutung beim Ionenaustausch zu.

Die Erfindung beruht darauf, ein Verfahren zu schaffen, bei dem durch Ionenaustausch ausschließlich in wässriger Lösung eine Schwermetallentfernung erzielt wird. Dabei wird die kristalline Struktur des Gerüst- bzw. Schichtsilikates, insbesondere des Zeoliths nicht beeinträchtigt, wie dies zum Beispiel durch eine Erhitzung auf eine Temperatur von über 400 °C zur Ammoniakfreisetzung geschehen würde. Im Folgenden wird zur leichteren Lesbarkeit immer nur von "Zeolith" gesprochen, damit sind aber die anderen Gerüst- bzw. Schichtsilikate ebenso gemeint.

Als natürliche Zeolithe werden insbesondere die von Passaglia - Sheppard in Reviews in Mineralogy and Geochemistry, 2001, Vol. 45, Seiten 70 und 71 angeführten angesehen: Analcime, Wairakite, Tschernichite, Bikitaite, Boggsite, Brewsterite, Chabazite, Willhendersonite, Dachiardite, Bellbergite, Edingtonite, Epistilbite, Erionite, Faujasite, Ferrierite, Gismondine, Garronite, Gobbinsite, Amicite, Gmelinite, Goosecreekite, Heulandite, Clinoptilolite, Laumontite, Levyne, Lovdarite, Perlialite, Mazzite, Merlinoite, Mutinaite, Montesommaite, Mordenite, Maricopaite, Natrolite, Mesolite, Scolecite, Gonnardite-Tetranatrolite, Gottardiite, Offretite, Partheite, Paulingite, Phillipsite, Harmotome, Roggianite, Stilbite, Stellerite, Barrerite, Terranovaite, Thomsonite, Yugawaralite, Cowlesite, Tschörnerite.

Im erfindungsgemäßen Prozess werden nahezu alle im Zeolith gebundenen Ionen in den ersten beiden Prozessschritten durch Ammoniumionen ersetzt. Die Ionen mit einer noch stärkeren Bindungskraft im Zeolithgitter wie Cäsium oder Rubidium werden durch die gewählte hohe Salzkonzentration ebenfalls in die Austauschlösung überführt. Durch die Regeneration der Lösung und dem mehrfachen Durchleiten durch die Probe wird immer ein hoher Schwermetallionengradient vom Gestein in die Lösung aufrecht erhalten. Es ist zudem möglich, Schwermetalle durch Komplexierung (z.B. mit EDTA) aus dem Gestein herauszulösen.

Im ersten Schritt kommt das Zeolithgestein in Kontakt mit 0.1 M Salzsäure, M steht hier und in der ganzen Beschreibung und den Ansprüchen, soweit nichts anderes angegeben ist, für molar. Es soll zudem vorgesehen werden, dass diese Lösung mit Ammoniumsalz (z.B. 5 M NH4Cl) angereichert wird. Hierbei werden leicht austauschbare Ionen wie Calciumionen zu einem großen Teil aus dem Zeolithgitter abgegeben, zusätzlich werden säurelösliche Nebenbestandteile angegriffen und in Lösung gebracht. Die Behandlung mit einer salzsauren Lösung mit pH-Wert 1 ist insbesondere in Hinsicht auf den Einsatz als Lebensmittelzusatzstoff bedeutsam, wo das Material im Magensaft einem vergleichbar sauren Milieu ausgesetzt ist. Der Zeolith wird nach diesem Schritt durch Hindurchleiten einer leicht basischen ammoniakalischen Lösung neutralisiert.

Im zweiten Schritt wird der fast vollständige Gesamtaustausch unter Nutzung von konzentrierten Ammoniumsalzlösungen (z.B. 5M NH4Cl), in einer Reihe von Reaktoren durchgeführt. Neben Ammoniumionen verbleibt ein Anteil Kaliumionen aufgrund der vergleichbaren Selektivität im Gitter. Der Austausch kann bei Raumtemperatur, aber auch unter erhöhter Temperatur und/oder unter Druck durchgeführt werden, wobei die Lösung jeweils von einem Reaktor in den nächsten fließt, somit der Reaktor mit dem am vollständigsten ausgetauschten Zeolith von der schwermetallfreien Lösung durchflossen wird. Die Austauschlösung ist zur Regenerierung durch Schwermetallfällung vorgesehen.

Unter Benutzung von Gleichung (1) stellt sich der Ammoniumaustausch prinzipiell so dar, dass der Zeolith folgende Summenformel erhält:

(K, NH4)x (AlxSi(36-x)O72).24H2O (5)

Im dritten Schritt (Ammonium-Calcium-Austausch) werden die im Gitter gebundenen Ammoniumionen durch Erhöhung des pH-Wertes der Lösung gemäß:

NH4+ + OH- → NH3 ↑ + H2O (6)

entfernt, wobei als Austauschion Calcium zur Verfügung steht. Hierfür wird der Reaktor von einer gesättigten Calciumhydroxid- und Calciumchloridlösung durchflossen. Das aufgrund des hohen pH-Weries der Lösung freigesetzte Ammoniak wird aus der Lösung durch Ammoniak-Stripping mit Inertgas und Einleitung in eine 5 M Salzsäure-Lösung im Inertgas-Kreislauf abgetrennt. Das im Zeolithgitter gebundene Ammonium wird so sukzessive durch Calcium-Ionen ersetzt.

Unter Benutzung von Gleichung (1) stellt sich der Gesamtaustausch prinzipiell so dar, dass der Zeolith folgende endgültige Summenformel erhält:

K(x-2y)Cay(AlxSi(36-x)072).24H2O (7)

Kalium und Calcium liegen nach dem Austausch durch das erfindungsgemäße Verfahren typischerweise in einem Verhältnis von etwa 5:1, also ergibt sich für die Summenformel mit Si/Al= 5:

K0.54Ca2.73(Al6Si30O72).24H2O (8)

Im vierten bis sechsten Schritt wird das noch stark basische, mit Chloriden und Calciumhydroxid getränkte Produkt in Reaktoren des Spülkreislaufs neutralisiert, gewaschen, getrocknet und schließlich verpackt.

Der vierte Prozesschritt kann in zwei Varianten vorgesehen werden:
1) der Reaktor wird von einer Calciumchloridlösung mit einem pH-Wert im Bereich von 5 bis 6 (HCl-Zugabe) durchströmt, bis sich im Spülwasser ein pH-Wert von 7- 8 einstellt.
2) Der Reaktor wird von Kohlendioxid-Gas oder von einer mit Kohlendioxid versetzten wässrigen Lösung durchflossen, bis sich durch Bindung der Lauge als Calciumcarbonat ein pH-Wert von 7- 8 im Abfließenden einstellt.

Im fünften Schritt (Chloridfreiwaschen) wird das Zeolithgestein mit deionisiertem Wasser gespült, um restliche Chloridionen und nicht im Gitter gebundene Calciumionen aus dem Gestein herauszuwaschen. Das deionisierte Wasser wird durch eine Inverse-Osmose-Anlage geführt.

Im sechsten Schritt (Trocknen) wird das Zeolithgestein bei einer Temperatur von 105°C im Gasstrom getrocknet. Die vom Zeolithgestein abgegebene Feuchtigkeit wird in einem Abscheider aus dem Gasstrom abgetrennt. Das getrocknete körnige Material wird anschließend dem Reaktor entnommen und verpackt.

Ein in wirtschaftlicher Hinsicht wesentlicher Teil des erfindungsgemäßen Verfahrens ist eine weitgehende Regeneration und Wiederverwendung der eingesetzten Chemikalien und Austauschlösungen. Somit kann auch hinsichtlich der Wirkungen auf die Umwelt durch einen nur geringen Ammoniumeintrag in Abwässer Rechnung getragen werden.
Die im Folgenden beschriebenen Austauschlösungen sind zur Regeneration vorgesehen:
1) Die Säurewaschlösung aus Schritt 1 wird regeneriert durch Ammoniakfreisetzung mittels Zugabe von CaC03, Ca(OH)2 oder CaO und Ammoniak-Stripping mit Inertgas und Einleitung in eine 5 M Salzsäure-Lösung im Gaskreislauf. Ausgestauschte Schwermetalle werden durch die Einstellung eines alkalischen Milieu als Carbonat oder Hydroxid gefällt Der wässerige Rückstand besteht im Wesentlichen aus Calcium- und Natriumchlorid, der feste Rückstand aus Calcium und Magnesiumcarbonat, weiteren Carbonaten und Hydroxiden und Zeolithschlamm vom Abrieb der Partikel.
2) Die Ammoniumsalzlösung des dritten Schrittes reichert sich bei mehrfacher Verwendung vor allem mit Alkaliionen an, Für die Wiederverwendung der Ammoniumsalzlösung stehen je nach Verbrauchsgrad zwei Möglichkeiten zur Regeneration zur Verfügung:
   - Die mit Alkali-, Erdalkali- und Schwermetallionen sehr stark beladene Ammoniumchloridlösung wird durch Ammoniakfreisetzung durch Ca(OH)2 oder CaO und Ammoniak-Stripping mit Inertgas und Einleitung in eine 5 M Salzsäure-Lösung im Gaskreislauf regeneriert. Der wässrige Rückstand besteht im Wesentlichen aus Calcium- und Natrium, und Kaliumchlorid, der feste Rückstand aus Calcium und Magnesiumcarbonat, weiteren Carbonaten und Hydroxiden.
   - Bei Lösungen mit geringerem Verbrauchsgrad wird eine Fällung der störenden Ionen vorgenommen. Die Regeneration erfolgt durch Fällung von Calcium, Magnesium und der Schwermetalle als Phosphat, Carbonat, Hydroxid, Sulfat, Sulfid und Abtrennung der Niederschläge durch geeignete Filter (Filterzentrifuge). Da die Phosphate im Überschuss zugegeben wurden, werden diese eine nochmalige Fällung mit Eisen(III)chlorid und Abscheidung der gefällten Eisenphosphate entfernt. Das überschüssige Eisen wird dabei als gefälltes Fe(OH)3 bzw FeOOH ebenfalls entfernt Die abgeschiedenen Fällungsprodukte enthalten daher im Wesentlichen Calcium- und Magnesiumphosphate, in denen Schwermetalle gebunden sind. Daneben fällt aus dem zweiten Schritt Eisenphosphat und Eisenhydroxid an.
3) Die Calciumhydroxidlösung und Calciumchloridlösung im dritten Schritt (Ammonium-Calcium-Austausch) wird durch Aufschlämmung von Ca(OH)2 oder CaO erneuert. Zugegebenes Calciumchlorid wird nicht verbraucht. Durch Kontakt mit dem Kohlendioxid der Luft wird sich ein Niederschlag von Calciumcarbonat ausbilden, der gelegentlich entfernt werden muss.
4) Die angesäuerte Spüllösung des vierten Schritts zum Neutralisieren (angesäuerte CaCl2) wird durch Zugabe von Salzsäure auf in einem pH-Wert-Bereich von 5-6 eingestellt. Bei Verwendung von Kohlendioxid als Neutralisationsmittel (Carbonatisierung) wird die Lösung unter Druck mit Kohlendioxid versetzt.
5) Das zum Chlor&ei-Waschen im fünften Schritt verwendete Wasser wird durch eine Inverse-Osmose-Filtermembran im Kreislauf geführt.
6) Die Ammoniumrückgewinnung aus den Prozessschritten eins bis drei erfolgt durch Einleiten des ammoniakhaltigen Gases in eine verdünnte Salzsäure (z.B. 5 mol/l). Die hieraus im Laufe des Prozesses entstehende Ammoniumchloridlösung kann sofort zur Erneuerung der Ausstauschlösung beitragen.

Als Abprodukte des Gesamtprozesses fallen daher ausschließlich wässrige Lösungen von Alkali und Erdalkalichloriden, Erdalkaliphosphate mit darin gebundenen Schwermetallen und Eisenphosphat bzw. Eisenhydroxid an.

Demnach besteht das Verfahren gemäß der Erfindung zur Entfernung von Schwermetallionen aus dem Gitter von Zeolithmineral und Ersetzung dieser durch Calciumionen durch Ionenaustausch stark zusammenfassend gesagt darin, dass Zeolithgestein in einer Kette von Austauscherreaktoren mit salzsauren und ammoniumchloridhaltigen Lösungen in Kontakt gebracht wird, dabei die Gitterkationen zu einem großen Teil durch Ammoniumionen ersetzt werden, die sich dann im Gitter befindlichen Ammoniumionen in einer basischen Calciumhydroxidlösung gegen Calcium ausgetauscht werden und dass das im Prozess verwendete Ammonium bzw. der Ammoniak im Kreislauf geführt wird, indem es aus den Austauschlösungen durch Ammoniak-Gastransport als Ammoniumion in Salzsäure gebunden wird und der Austauschlösung wieder zugeführt werden kann. Die aus dem Gitter ausgetauschten Ionen werden im Wesentlichen als Phosphat, Carbonat oder Hydroxid ausgefällt.

Die folgenden Beispiele sollen das Verfahren gemäß der Erfindung näher erläutern.

### Beispiel 1:

Eine Pilotanlage ist in zwei Prozessteile untergliedert:

Erster Teil Austauschreaktion bestehend aus einem Anlagenteil 1 mit fünf Reaktoren und sieben Behältern für Lösungen. Das auszutauschende Zeolithgestein wird in den Reaktor 1 für die Säurewaschung eingefüllt und von diesem zur Reaktorengruppe 2 für den Ammoniumaustausch und von dieser zum Reaktor 3 für den Ammonium-Calcium-Austausch jeweils über Saugleitungen geführt und durchlaufen in den Reaktoren nacheinander drei Prozessschritte, in denen sie von Austauschlösungen durchflossen werden.

Zweiter Teil Neutralisation, Waschen, Trocknen, Verpacken/Lagern. Das Zeolithgestein wird vom Reaktor 3 zur Reaktorengruppe 4 über eine Saugleitung geführt. Es durchläuft in den Reaktoren nacheinander drei Prozessschritte, die der Neutralisation, Waschung und Trocknung dienen. Dies umfasst die Behandlung mit angesäuerten Lösungen (CO2 - Strom, kohlensaure Lösung oder HCl-Lösung) zur Erniedrigung des pH-Wertes, einer Chloridfrei-Waschung, Trocknung und Verpackung bzw. Lagerung.

Die Lösungen befinden sich in:
A Säurewaschung: einem Vorratsbehälter für salzsaure 5 molare Ammoniumchlorid-Austauschlösung mit pH-Wert 1, sowie einem Behälter mit Wasser zum anschließenden neutralwaschen (Ammoniakzugabe);
B Schwermetallentfernung: einem Vorratsbehälter für eine 5 molare Ammoniumchlorid-Austauschlösung;
C Fällungsbehälter: einem Fällungsbehälter und Behelfsbehälter für Phospatfällung (z.B. Ca-, Pb-, Ba-Phosphat);
D Ammonium-Calcium-Austausch: einem Behälter für Calciumhydroxidaufschlämmung und Calciumchlorid;
E Neutralwaschen: einem Behälter mit einer Calciumchloridlösung mit einem pH-Wert von 4 bis 5;
F Spülung: einem Spülbehälter mit deionisiertem Wasser und einer Inverse-Osmose-Anlage;
G Ammoniakabscheidung: ein Behälter mit 5 molarer Salzsäure.

### Prozesschritt erster Teil, Ionenaustausch:

Im kontinuierlichen Betrieb enthalten die Reaktoren je 100 kg Zeolithgestein mit einer Korngröße von 0,5 bis 1 mm in verschiedenen Stadien des Ionenaustausches. Die Reaktoren sind miteinander und mit den Vorratsbehältern durch Rohrleitungen mit Ventilen verbunden, so dass sie von den verschiedenen Ionenaustauschlösungen in einer frei wählbaren Reihenfolge durchflossen werden.

Im ersten Schritt (Säurewaschung) wird der Reaktor mit 100 kg Zeolithgestein befüllt und nachfolgend für 24 h durch Lösung A (5 M NH4Cl, pH-Wert 1) mit einer Temperatur von 80 °C durchflossen.

Im zweiten Schritt (Schwermetallentfernung) verweilt das Gestein 4 Tage, hierbei werden vier Reaktoren nacheinander von Lösung B (5 M NH4Cl, bei 80°C) durchflossen, so dass der neu aufgerückte Reaktor von der bereits mit Schwermetall- und Alkali- und Erdalkaliionen aus den vorangehenden Reaktoren angereicherten Lösung durchflossen wird. Der Reaktor rückt dann sukzessive auf und wird im letzten Teilschritt von der reinen oder regenerierten Ammoniumchloridlösung durchflossen.

Im dritten Schritt (Ammonium-Calcium-Austausch) wird der Reaktor von einer gesättigten Calciumhydroxid- und Calciumchloridlösung durchflossen. Der aufgrund des hohen pH-Wertes der Lösung freigesetzte Ammoniak wird aus der Lösung durch Ammoniak-Stripping mit Inertgas und Einleitung in eine 5 M Salzsäure-Lösung im Gaskreislauf abgetrennt. Das im Zeolithgitter gebundene Ammonium wird so sukzessive durch Calcium-Ionen ersetzt.

### Prozesschritt zweiter Teil Neutralisation, Waschen, Trocknen, Verpacken:

Im kontinuierlichen Betrieb enthalten die Reaktoren je 100 kg Zeolithgestein mit einer Korngröße von 0,5 bis 1 mm, der Ionenaustausch ist abgeschlossen, das Zeolithgitter ist mit Calciumionen beladen. Die Reaktoren sind miteinander und mit den Vorratsbehältern durch Rohrleitungen mit Ventilen verbunden, so dass sie von den verschiedenen Ionenaustauschlösungen in einer frei wählbaren Reihenfolge durchflossen werden.

Im vierten Schritt (Neutralwaschen) wird der Reaktor von einer Calciumchloridlösung mit einem pH-Wert im Bereich von 4 bis 5 (HCl-Zugabe) durchströmt, bis sich im Spülwasser ein pH-Wert von 7 - 8 einstellt.

Im fünften Schritt (Chloridfreiwaschen) wird der Reaktor von deionisiertem Wasser durchströmt, um restliche Chloridionen und nicht im Gitter gebundene Calciumionen aus dem Gestein herauszuwaschen. Das deionisierte Wasser wird durch eine Inverse-Osmose-Anlage regeneriert.

Im sechsten Schritt (Trocknen) wird der Reaktor von Heißluft oder Kohlendioxid bei einer Temperatur von 105°C durchströmt und so getrocknet. Die vom Zeolithgestein abgegebene Feuchtigkeit wird in einem Abscheider aus dem Gasstrom abgetrennt. Das getrocknete körnige Material wird anschließend dem Reaktor entnommen und verpackt oder zwischengelagert.

Die Austauschlösungen können folgendermaßen regeneriert werden:
A Säurewaschlösung: Regeneration durch Ammoniakfreisetzung durch Ca(OH)2 oder CaO und Ammoniak-Stripping mit Inertgas und Einleitung in eine 5 M Salzsäure-Lösung im Gaskreislauf. Der Rückstand besteht im Wesentlichen aus Calciumchlorid und Zeolithschlamm vom Abrieb der Partikel.
B Ammoniumsalzlösung: Regeneration durch Ammoniakfreisetzung durch Ca(OH)2 oder CaO und Ammoniak-Stripping mit Inertgas und Einleitung in eine 5 M Salzsäure-Lösung im Gaskreislauf. Oder Regeneration durch Schwermetallfällung als Phosphat/Carbonat und Abtrennung durch Hindurchleitung durch eine Filterzentrifuge und Abscheidung der Precipitate. Anschließend Abscheidung der im Überschuss zugefügten Phosphate durch Fällung mit Eisen(III)chlorid und Abscheidung der gefällten Eisenphosphate.
D Ammonium-Calcium-Austausch: Die Calciumhydroxidlösung wird durch zusätzliche Aufschlämmung von Ca(OH)2 oder CaO erneuert.

### Beispiel 2:

Die Pilotanlage ist analog zu Beispiel 1 aufgebaut.

Als Austauschlösung D wird jedoch reine Calciumhydroxidlösung verwendet.

Statt Austauschlösung E wird der Zeolith mit Kohlendioxid begast oder mit Kohlendioxidangereichertem Wasser durchströmt, bis ein pH-Wert von 7 - 8 erreicht ist.

### Folgende Prozessschritte und verwendete Lösungen unterscheiden sich von denen des Beispiels 1:

Im dritten Schritt (Ammonium-Calcium-Austausch) wird der Reaktor von einer gesättigten Calciumhydroxidlösung durchflossen. Der aufgrund des hohen pH-Wertes der Lösung freigesetzte Ammoniak wird aus der Lösung durch Ammoniak-Stripping mit Inertgas und Einleitung in eine 5 M Salzsäure-Lösung im Gaskreislauf abgetrennt. Das im Zeolithgitter gebundene Ammonium wird so sukzessive durch Calcium-Ionen ersetzt. Die Austauschlösung braucht in diesem Fall kein Chlorid zu enthalten, da der anschließend erfolgende Neutralisationsprozess mit Kohlendioxid erfolgt. Die Chloridfracht wird dadurch gesenkt.

Im vierten Schritt (Neutralisieren) wird der Reaktor von Kohlendioxid-Gas oder von einer mit Kohlendioxid angereicherten wässrigen Lösung durchflossen, bis sich durch Bindung der Base als Calciumcarbonat ein pH-Wert von 7- 8 einstellt. Die dadurch bedingte Beimischung von Calciumcarbonat in das Gestein ist unproblematisch.

Die Lösungen befinden sich in:
D Ammonium-Calcium-Austausch: einem Behälter für Calciumhydroxidaufschlämmung;
E Neutralisieren: Neutralisieren mit Kohlendioxid, Umwandlung von Calciumhydroxid-Resten in Calciumcarbonat

Die Austauschlösungen werden wie in Beispiel 1 regeneriert.

Die Erfindung ist nicht auf die erläuterten Ausführungsbeispiele beschränkt, sondern kann verschiedentlich abgeändert werden, insbesondere in Berücksichtigung der jeweils vorliegenden Schwermetalle und ihres Gehaltes. Die Reaktoren können eine andere Größe als angegeben aufweisen, durch Änderungen der Durchflussgeschwindigkeiten und eventuell durch Schaffung turbulenter Strömung mit verbesserter Transportfähigkeit der auszutauschenden Ionen können die Verweilzeiten geändert, insbesondere verkürzt werden.

Im Wesentlichen wird das Zeolithgestein erfindungsgemäß in einer Kette von Austauscherreaktoren mit salzsauren und ammoniumhaltigen Lösungen in Berührung gebracht, dabei werden die Gitterkationen zu einem großen Teil durch Ammoniumionen ersetzt, die sich dann im Gitter befindlichen Ammoniumionen werden in einer basischen Calciumhydroxidlösung gegen Calcium ausgetauscht. Das im Prozess verwendete Ammonium bzw. der Ammoniak wird im Kreislauf geführt, indem es aus den Austauschlösungen durch Ammoniak-Gastransport als Ammoniumion in Salzsäure gebunden wird und der Austauschlösung wieder zugeführt werden kann. Die aus dem Gitter ausgetauschten Ionen werden im Wesentlichen als Phosphat, Carbonat oder Hydroxid ausgefällt.

## Patentansprüche

1. Verfahren zur Entfernung von Schwermetallionen aus Gerüst- bzw. Schichtsilikaten, insbesonders aus Zeolithgestein und ganz insbesondere aus Clinoptilolith, **dadurch gekennzeichnet, dass** das Verfahren auf Ionenaustausch des gebrochenen und gesichteten Gestein mit einer Korngröße von 0,5 bis 5 mm in wässeriger Phase beruht und zumindest die folgenden Schritte umfasst:
a) zuerst werden durch Einbringen von bzw. Kontakt mit Ammonium- und gegebenenfalls Kaliumchloridlösungen in einem bevorzugt mehrstufigen Prozess die Ionen im Zeolithgestein durch Ammonium und Kalium ersetzt,
b) die in das Zeolithgitter aufgenommenen Ammoniumionen werden anschließend durch Kontakt mit einer Calciumchloridlösung und/oder einer gesättigten Calciumhydroxidlösung unter Umwandlung des Ammoniums in Ammoniak durch Calciumionen ersetzt,
c) sodann wird der Ammoniak durch Einleiten eines Inertgasstroms aus der Lösung entfernt und bevorzugt in Salzsäure geleitet,
d) nach möglichst vollständigem Austausch der Ammonium- gegen Calciumionen wird das gebrochene Gestein mit einer mit Salzsäure angesäuerten Calciumchloridlösung durchströmt, bis das abfließende Spülwasser ein pH-Wert von 7 - 8 aufweist,
e) nach Erreichen eines im Wesentlichen neutralen pH-Wert-Bereiches wird die im Gestein verbliebene chloridhaltige Lösung durch mehrfaches Spülen mit deionisiertem Wasser entfernt, die Spüllösung wird bevorzugt durch das Durchlaufen einer Inverse-Osmose-Anlage regeneriert.

2. Verfahren nach Anspruch 1, **dadurch gekennzeichnet, dass** die im Schritt c) entstandene Ammoniumchloridlösung der Austauschlösung zugesetzt wird.

3. Verfahren nach Anspruch 1, **dadurch gekennzeichnet, dass** die Austauschlösung zur Erhöhung der Löslichkeit der Ionen einen pH-Wert von 1 aufweist.

4. Verfahren nach Anspruch 1, **dadurch gekennzeichnet, dass** der Austauschprozess zur Erhöhung der Austauschrate der Ionen bei erhöhter Temperatur und/oder unter erhöhtem Druck durchgeführt wird.

5. Verfahren nach Anspruch 1, **dadurch gekennzeichnet, dass** die Austauschlösung Chemikalien zur Komplexierung von Schwermetallionen, wie EDTA, enthält.

6. Verfahren nach Anspruch 1, **dadurch gekennzeichnet, dass** aus der Ammonium- und Kaliumsalzlösungen durch Hinzufügen von Carbonaten, Phosphaten, Sulfaten, Sulfiden, Fluoriden und/oder Hydroxiden die Schwermetallsalze ausgefällt werden und nach anschließender Filterung/Abscheidung der Fällungsprodukte die Lösung im Kreislauf zurückgeführt wird.

7. Verfahren nach Anspruch 1, **dadurch gekennzeichnet, dass** die Ammonium-Ionen der Austauschlösung durch Zugabe von Calciumhydroxid in Ammoniak umgewandelt werden.

8. Verfahren nach Anspruch 1, **dadurch gekennzeichnet, dass** nach dem Austausch mit Calciumhydroxidlösung ohne Calciumchloridbeimischung die pH-Wert-Erniedrigung durch Einblasen von Kohlendioxid oder Einströmen einer kohlensauren Lösung und Bildung von Calciumcarbonat erfolgt.

## Claims

1. Method for removing heavy metal ions from tectosilicates or phyllosilicates, in particular from zeolite rock and more particularly from clinoptilolite, **characterised in that** the method is based on ion exchange of the broken and sifted rock having a grain size of 0.5 to 5 mm in aqueous phase, and comprises at least the following steps:
a) firstly, the ions in the zeolite rock are replaced by ammonium and potassium by introduction of, or contact with, ammonium chloride solutions and optionally potassium chloride solutions in a preferably multistage process,
b) the ammonium ions absorbed into the zeolite lattice are subsequently replaced by calcium ions by contact with a calcium chloride solution and/or a saturated calcium hydroxide solution, the ammonium being transformed into ammonia,
c) the ammonia is then removed from the solution by the introduction of an inert gas stream, and preferably conveyed into hydrochloric acid,
d) after the ammonium ions have been exchanged for calcium ions as completely as possible, a calcium chloride solution, which is acidified with hydrochloric acid, is caused to flow through the broken rock until the effluent rinse water has a pH value of 7-8,
e) after a substantially neutral pH value range has been reached, the chloride-containing solution which remains in the rock is removed by repeated rinsing with deionised water, the rinsing solution preferably being regenerated by passing through a reverse osmosis system.

2. Method according to claim 1, **characterised in that** the ammonium chloride solution formed in step c) is added to the exchange solution.

3. Method according to claim 1, **characterised in that** the exchange solution has a pH value of 1 in order to increase the solubility of the ions.

4. Method according to claim 1, **characterised in that** the exchange process is carried out at an increased temperature and/or under increased pressure in order to increase the exchange rate of the ions.

5. Method according to claim 1, **characterised in that** the exchange solution contains chemicals, such as EDTA, for complexing heavy metal ions.

6. Method according to claim 1, **characterised in that** the heavy metal salts are precipitated from the ammonium salt solutions and potassium salt solutions by addition of carbonates, phosphates, sulphates, sulphides, fluorides and/or hydroxides, and the solution is recirculated after subsequent filtration/separation of the precipitation products.

7. Method according to claim 1, **characterised in that** the ammonium ions of the exchange solution are transformed into ammonia by addition of calcium hydroxide.

8. Method according to claim 1, **characterised in that** after the exchange with calcium hydroxide solution without admixing of calcium chloride, the pH value is reduced by bubbling in carbon dioxide or streaming in a carbonic acid solution and forming calcium carbonate.

## Revendications

1. Procédé d'extraction d'ions de métaux lourds de tectosilicates et/ou de silicates stratifiés, en particulier de zéolite et notamment de clinoptilolite, **caractérisé en ce que** le procédé se fonde sur l'échange d'ions de la roche broyée et triée, avec une grosseur de grain comprise entre 0,5 et 5 mm, en phase aqueuse et comporte au moins les étapes suivantes :
a) d'abord, les ions de la zéolite sont remplacés par de l'ammonium et du potassium au cours d'un processus comportant de préférence plusieurs étapes, en introduisant des solutions de chlorure d'ammonium et, le cas échéant, de chlorure de potassium ou en établissant un contact avec celles-ci;
b) les ions d'ammonium incorporés dans le réseau de zéolite sont ensuite remplacés par des ions de calcium, par contact avec une solution de chlorure de calcium et/ou une solution saturée d'hydroxyde de calcium, avec transformation de l'ammonium en ammoniac;
c) ensuite, l'ammoniac est extrait de la solution par introduction d'un courant de gaz inerte et est de préférence introduit dans de l'acide chlorhydrique;
d) après l'échange, si possible complet, des ions d'ammonium contre des ions de calcium, la roche broyé est parcourue par une solution de chlorure de calcium acidifiée avec de l'acide chlorhydrique, jusqu'à ce que le liquide de rinçage qui s'écoule présente une valeur pH de 7-8;
e) après avoir atteint une plage de valeurs pH sensiblement neutre, la solution contenant du chlorure, qui subsiste dans la roche, est extraite par rinçage répété avec de l'eau désionisée, et la solution de rinçage est de préférence régénérée par un passage dans une installation d'osmose inverse.

2. Procédé selon la revendication 1, **caractérisé en ce que** la solution de chlorure d'ammonium obtenue à l'étape c) est ajoutée à la solution d'échange.

3. Procédé selon la revendication 1, **caractérisé en ce que**, pour augmenter la solubilité des ions, la solution d'échange présente une valeur pH de 1.

4. Procédé selon la revendication 1, **caractérisé en ce que**, pour augmenter le taux d'échange des ions, le processus d'échange est effectué une température accrue et/ou sous une pression accrue.

5. Procédé selon la revendication 1, **caractérisé en ce que** la solution d'échange contient des substances chimiques pour la complexation d'ions de métaux lourds, par exemple EDTA.

6. Procédé selon la revendication 1, **caractérisé en ce que** les sels de métaux lourds contenus dans les solutions salines d'ammonium et de potassium sont précipités en ajoutant des carbonates, des phosphates, des sulfates, des sulfures, des fluorures et/ou des hydroxydes, et après filtration/séparation subséquente des produits de précipitation, la solution est renvoyée dans le circuit.

7. Procédé selon la revendication 1, **caractérisé en ce que** les ions d'ammonium de la solution d'échange sont transformés en ammoniac par addition d'hydroxyde de calcium.

8. Procédé selon la revendication 1, **caractérisé en ce que**, après l'échange avec la solution d'hydroxyde de calcium, sans addition de chlorure de calcium, l'abaissement de la valeur pH est effectué par injection de dioxyde de carbone ou introduction d'une solution carbonatée et formation de carbonate de calcium.
